# EUROPEAN PATENT APPLICATION

(11) **EP 4 302 917 A1**
(43) Date of publication of application: **10.01.2024**
(21) Application number: 22762780.9
(22) Date of filing: 12.01.2022
(51) Int. Cl.: B23K 26/046

(54) **LASER PROCESSING DEVICE**

(30) Priority: 05.03.2021 JP 2021035842
(71) Applicant: Panasonic Intellectual Property Management Co., Ltd., Osaka-shi, Osaka 540-6207 (JP)
(72) Inventor: YAMAZAKI, Naoya, Kadoma-shi, Osaka 571-8506 (JP)
(74) Representative: Murgitroyd & Company
(86) International application number: PCT/JP2022/000742
(87) International publication number: WO 2022/185721

(57) **Abstract**

A control device (21) controls a scanning unit (37) and a drive unit (39) to scan laser light (LW). In addition, the control device (21) controls a focal point adjustment unit (36) and a drive unit (38) to adjust the focal position of the laser light (LW). In a display mode in which a processing subject (W) is irradiated with visible light (LH), the control device (21) controls the scanning unit (37) and the drive unit (39) to scan the visible light (LH). The control device (21) does not change an inter-lens distance of lenses (36a-36b) of the focal point adjustment unit (36).

## Description

### TECHNICAL FIELD

The present disclosure relates to a laser processing device.

### BACKGROUND ART

A laser processing device includes a laser beam source that emits a laser beam of non-visible light and a visible light source that emits a guide beam of visible light (refer to, for example, Patent Document 1). The laser processing device irradiates a workpiece with a laser beam to process the workpiece. Further, the laser processing device irradiates the workpiece with a guide beam of visible light at the same position onto which the processing laser beam is irradiated. The guide beam allows an operator to check or adjust the irradiation position of the laser beam on the workpiece.

### CITATION LIST

### Patent Literature

Patent Literature 1: Japanese Laid-Open Patent Publication No. 2007-61843

### SUMMARY OF INVENTION

### Technical Problem

When three-dimensional processing is performed on a workpiece or the like having a three-dimensional processing surface such as a curved processing surface, the focal positions of a laser beam and a guide beam need to be adjusted in accordance with the processing surface. There is room for improvement in the adjustment of the laser beam and the guide beam.

### Solution to Problem

A laser processing device according to one aspect of the present disclosure includes a laser beam source that emits a laser beam for processing a workpiece, a visible light source that emits a visible light beam, a scanning unit that scans the laser beam and the visible light beam, a lens movement unit including at least one lens that transmits the laser beam and the visible light beam and a movement mechanism that moves the lens in a direction of a path of the laser beam and the visible light beam, and a controller that controls the lens movement unit and the scanning unit. When the laser beam passes through the lens, the controller controls the scanning unit to scan the laser beam and controls the lens movement unit to move the lens and change the focal position of the laser beam. When the visible light beam passes through the lens, the controller controls the scanning unit to scan the visible light beam without moving the lens from a fixed position.

### Advantageous Effects of Invention

In the above aspect of the present disclosure, the laser processing device allows for easy adjustment of the laser beam and the visible light beam.

### BRIEF DESCRIPTION OF DRAWINGS

Fig. 1 is a schematic block diagram showing the configuration of a laser processing device according to a first embodiment.
Fig. 2A is a diagram showing the relationship between the lens position and the focal position of a laser beam in a focus adjustment unit.
Fig. 2B is a diagram showing the relationship between the lens position and the focal position of a laser beam in the focus adjustment unit.
Fig. 2C is a diagram showing the relationship between the lens position and the focal position of a laser beam in the focus adjustment unit.
Fig. 3 is a diagram of a visible light source and a visible light beam.
Fig. 4 is a schematic block diagram showing the configuration of a laser processing device according to a second embodiment.
Fig. 5 is a schematic block diagram showing the configuration of a laser processing device according to a third embodiment.

### DESCRIPTION OF EMBODIMENTS

### First Embodiment

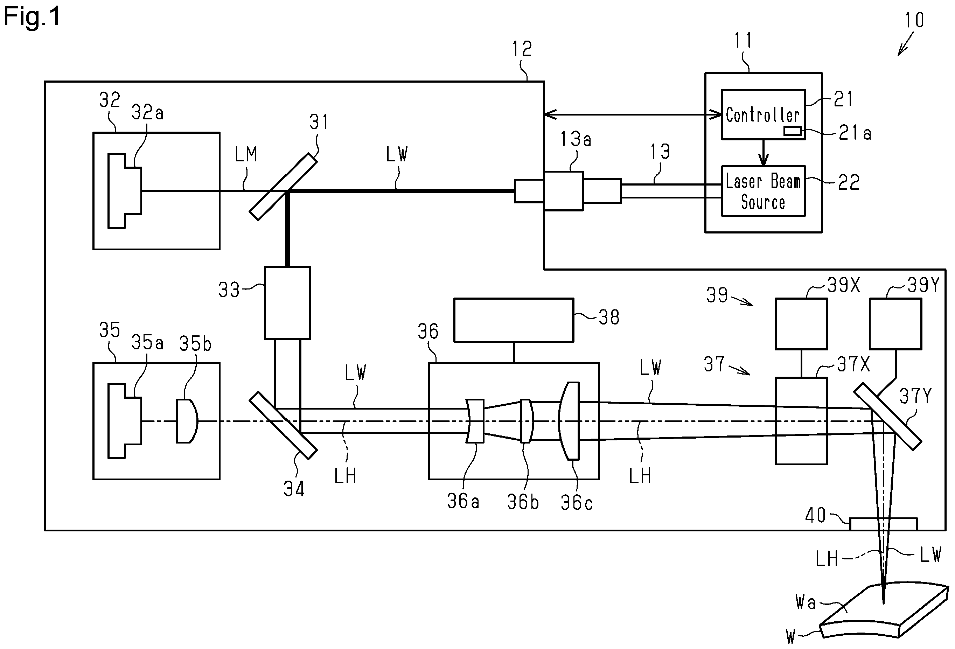

A first embodiment will now be described with reference to Figs. 1, 2A to 2C, and Fig. 3.

A laser processing device 10 shown in Fig. 1 irradiates a workpiece Wwith a laser beam LW to process the workpiece W. The laser processing device 10 is, for example, a laser marking device that marks the workpiece W. The workpiece W includes a three-dimensional processing surface Wa. The laser processing device scans a laser beam LW over the processing surface Wa and adjusts the focal position of the laser beam LW in accordance with the processing surface Wa. Examples of processing performed with the laser beam LW include a process that removes (cutting, boring, etc.) part of the workpiece W, a process that discolors or modifies part of the workpiece Wwith the heat of the laser beam LW, and the like.

The laser processing device 10 also irradiates the workpiece Wwith a visible light beam LH. The visible light beam LH has a light intensity that is not strong enough to process the workpiece W. By irradiating the workpiece Wwith the visible light beam LH, an operator will be able to check the irradiation position or the like of the laser beam LW on the workpiece W.

As shown in Fig. 1, the laser processing device 10 includes a laser emission unit 11, a laser head 12, and an optical fiber cable 13.

The laser emission unit 11 includes a controller 21 and a laser beam source 22. The controller 21 controls the entire operation of the laser processing device 10. The controller 21 is electrically connected to the laser beam source 22 and controls driving of the laser beam source 22.

The laser beam source 22 emits a laser beam having a predetermined wavelength. The laser beam processes the workpiece W. The laser beam LW is non-visible light and may have a wavelength of, for example, 1060 nm, 1064 nm, 9.3 µm, 10.6 µm, or the like.

The optical fiber cable 13 transmits the laser beam emitted from the laser beam source 22 to the laser head 12. The optical fiber cable 13 includes a head connector 13a. The head connector 13a is configured to be detachable from the laser head 12. The head connector 13a is fixed to the laser head 12 by fasteners such as screws.

The laser head 12 irradiates the workpiece Wwith the laser beam LW emitted from the laser beam source 22.

The laser head 12 includes a mirror 31, a monitor unit 32, a beam expander 33, a mirror 34, a visible light source 35, a focus adjustment unit 36, a scanning unit 37, driving units 38, 39, and a protective glass 40.

The laser beam LW transmitted through the optical fiber cable 13 is emitted out of the laser head 12 via the mirror 31, the beam expander 33, the mirror 34, the focus adjustment unit 36, the scanning unit 37, and the protective glass 40. The emitted laser beam LW is irradiated onto the workpiece W.

The mirror 31 is configured to transmit part of the laser beam LW emitted from the optical fiber cable 13. The laser beam LW passed through the mirror 31 is received by a light-receiving element 32a of the monitor unit 32 as monitor light LM. The light-receiving element 32a outputs an electric signal corresponding to the received monitor light LM. The controller 21 detects the intensity of the laser beam LW from the electric signal output from the light-receiving element 32a. Then, the controller 21 controls the laser beam source 22 so that the laser beam LW emitted from the optical fiber cable 13 has a fixed intensity.

The laser beam LW reflected by the mirror 31 enters the beam expander 33. The beam expander 33 increases the beam diameter of the incident laser beam by a predetermined magnification ratio and emits the laser beam with the increased beam diameter.

The mirror 34 is configured to reflect the laser beam LW emitted from the beam expander 33. The mirror 34 also transmits a visible light beam LH emitted from the visible light source 35. That is, the mirror 34 is a dichroic mirror that reflects the laser beam LW and transmits the visible light beam LH. The mirror 34 is adjusted so that the reflected laser beam LW and the transmitted visible light beam LH are coaxial.

The visible light source 35 includes a light-emitting element 35a and a lens 35b. The light-emitting element 35a emits a visible light beam LH having a wavelength (second wavelength) differing from the wavelength (first wavelength) of the laser beam LW. The wavelength of the visible light beam LH is, for example, in a range of 640 nm to 660 nm or a range of 650 nm to 660 nm. The range of the wavelength may be determined by any combination of the upper and lower limits described above.

The laser beam LW reflected by the mirror 34 and the visible light beam LH passed through the mirror 34 enter the focus adjustment unit 36.

The focus adjustment unit 36 of the present embodiment includes lenses 36a, 36b, and 36c. The lenses 36a to 36c are arranged in a light path of the laser beam LW and the visible light beam LH. In the present embodiment, the lens 36a is a concave lens, and the lenses 36b and 36c are convex lenses. The lens 36a is supported by a support member (not shown) such as a linear slider so that the position of the lens 36a is changeable in the light path. The driving unit 38 moves the lens 36a in the light path. In the present embodiment, the lens 36a corresponds to a first lens, and the lens 36b corresponds to a second lens. The support member and the driving unit 38 correspond to a movement mechanism that moves the lens 36a in the direction of the path. The focus adjustment unit 36 and the driving unit 38 correspond to a lens movement unit.

The controller 21 controls the driving unit 38 to move the lens 36a to a given position. The controller 21 includes a storage unit 21a. The storage unit 21a stores processing data for projecting the laser beam LW. The processing data stored in the storage unit 21a is set for the workpiece W irradiated with the laser beam LW.

The processing data includes coordinates onto which the laser beam LW is irradiated, the intensity of the laser beam LW, the scanning speed at which the laser beam LW is scanned, and the like. The coordinates include coordinates of three dimensions. The coordinates include coordinates for two dimensions (X coordinate and Y coordinate) for scanning the laser beam LW and a coordinate (Z coordinate) indicating the focal position of the laser beam LW.

The storage unit 21a stores position information for the visible light beam LH. The position information is used when irradiating the workpiece Wwith the visible light beam LH. When irradiating the workpiece Wwith the visible light beam LH, the controller 21 controls the driving unit 38 to move the lens 36a to the position indicated by the position information read from the storage unit 21a. The controller 21 holds the lens 36a in position.

In the present embodiment, the position information for the visible light beam LH is set to coordinates within an adjustment range of the focal position of the laser beam LW. The adjustment range is set by a maximum value and a minimum value of the Z coordinate. The position information is set to, for example, coordinates in the middle of the adjustment range.

The position information may be set in the above adjustment range so that the visible light beam LH has the beam diameter of a substantially parallel light. The substantially parallel light refers to light having substantially the same beam diameter within the adjustment range.

The scanning unit 37 includes galvanometer mirrors 37X and 37Y. The driving unit 39 includes driving portions 39X and 39Y. The galvanometer mirrors 37X and 37Y reflect the laser beam LW. The driving portions 39X and 39Y rotate the galvanometer mirrors 37X and 37Y. The driving portions 39X and 39Y are, for example, motors controlled by the controller 21. The galvanometer mirrors 37X and 37Y and the driving portions 39X and 39Y are configured to scan the laser beam LW in the directions of two dimensions. For example, the galvanometer mirror 37X and the driving portion 39X scan the laser beam LW in an X-axis direction, and the galvanometer mirror 37Y and the driving portion 39Y scan the laser beam LW in a Y-axis direction.

The laser head 12 has an opening through which the laser beam LW passes. The protective glass 40 closes the opening.

### Adjustment of Focal Length

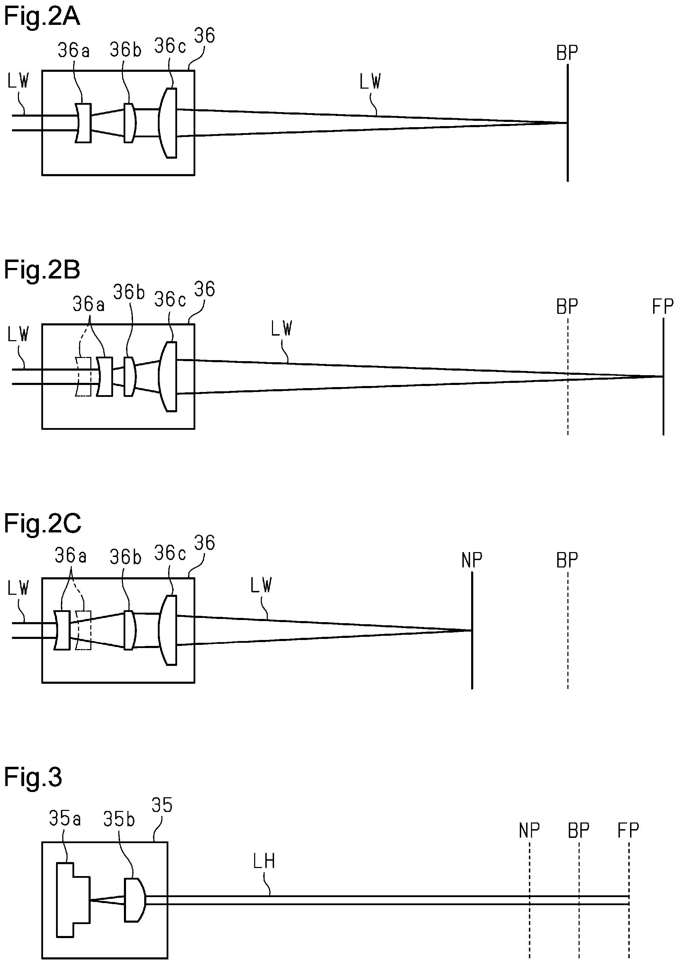

As shown in Fig. 2A, the focus adjustment unit 36 includes the lenses 36a, 36b, and 36c. The lens 36a is, for example, a concave lens, and the lens 36b and the lens 36c are convex lenses. The lens 36a and the lens 36b enlarge the beam diameter of an incident laser beam and output the laser beam LW as a parallel light. The lens 36c condenses the parallel laser beam LW.

As shown in Fig. 2B, when the lens 36a is moved toward the lens 36b, the laser beam LW passed through the lens 36b is expanded, that is, gradually increased in beam diameter. The laser beam LW is condensed by the lens 36c, and the focal position of the laser beam LW becomes farther from the lens 36c than the focal position shown in Fig. 2A. In other words, the focal length of the laser beam LW increases.

As shown in Fig. 2C, when the lens 36a is moved away from the lens 36b, the laser beam LW passed through the lens 36b is contracted, that is, gradually decreased in beam diameter. The laser beam LW is condensed by the lens 36c, and the focal position of the laser beam LW becomes closer to the lens 36c than the focal position shown in Fig. 2B. In other words, the focal length of the laser beam LW decreases.

The controller 21 shown in Fig. 1 controls the driving unit 38 to control the position of the lens 36a of the focus adjustment unit 36. The movement of the lens 36a changes the inter-lens distance between the lenses 36a and 36b. In other words, the controller 21 controls the focus adjustment unit 36 and the driving unit 38 to adjust the inter-lens distance.

Fig. 2A shows a state in which the lens 36a is moved to a reference position. The reference position is a middle position in a movement range of the movement mechanism that moves the lens 36a. A plane that includes the focal position of the laser beam LW in this state and is orthogonal to the optical axis is a reference plane BP. The plane orthogonal to the optical axis is defined by an X axis (X coordinate) and a Y axis (Y coordinate), or coordinates for two dimensions. The direction of the optical axis defines a Z axis (Z coordinate), or coordinate for one dimension.

Figs. 2B and 2C show the adjustment range of a focal position when the lens 36a is moved.

Fig. 2B shows a state in which the lens 36a is moved from the reference position shown in Fig. 2A to a position that is the closest to the lens 36b in the moving range of the first lens. The focal position of the laser beam LW in this state is the farthest point position in the Z-axis direction, and a plane that includes the farthest point position and is orthogonal to the optical axis defines a farthest point plane FP. In strict terms, each diagonal point of a square processing region (printing area) in a two-dimensional plane will be the farthest point position in the processing region. However, the farthest point position is at the origin point position on the two-dimensional plane in the optical axis direction (Z-axis direction).

Fig. 2C shows a state in which the lens 36a moved from the reference position shown in Fig. 2A to a position farthest from the lens 36b in the moving range of the first lens. The focal position of the laser beam LW in this state is the closest point position in the Z-axis direction, and a plane that includes the closest point position and is orthogonal to the optical axis defines a closest point plane FP.

### Visible Light Beam

Fig. 3 shows the visible light source 35 and the visible light beam LH.

The visible light source 35 includes the light-emitting element 35a and the lens 35b. The visible light source 35 is configured to emit the visible light beam LH as parallel light. The parallel light includes light having substantially the same beam diameter so that the beam diameter is the same in the above adjustment range of the laser beam LW; specifically, the range from the farthest point plane FP shown in Fig. 2B to the closest point plane NP shown in Fig. 2C. When the light has substantially the same beam diameter, the difference between the maximum beam diameter and the minimum beam diameter in the adjustment range is 10% or less of the maximum beam diameter. Light having such a difference in the beam diameter is referred to as a substantially parallel light.

Fig. 3 does not show the focus adjustment unit 36, the scanning unit 37, and the like. The focus adjustment unit 36 shown in Fig. 1 is configured so that when the lens 36a is located at a predetermined fixed position, a parallel light is obtained in the adjustment range. The fixed position of the lens 36a may be any position between the farthest point position and the closest point position, and is, for example, a reference position.

### Operation

The controller 21 performs a number of operation modes. The operation modes include a processing mode and a display mode. The controller 21 performs the processing mode and the display mode by controlling the laser beam source 22 and the components of the laser head 12. The processing mode irradiates the workpiece Wwith the laser beam LW to process the workpiece W. The display mode irradiates the workpiece Wwith the visible light beam LH so that the laser beam LW scanned over the workpiece W becomes visible. The modes are switched by operating an operation unit (not shown) arranged on the controller 21, an upper-rank controller connected to the controller 21, or the like.

In the processing mode, the controller 21 controls the laser beam source 22 to emit the laser beam LW. The controller 21 adjusts the intensity of the laser beam LW through feedback control of the amount of light received by the monitor unit 32. In this case, the controller 21 controls the visible light source 35 so that the visible light source 35 does not emit the visible light beam LH. The laser beam LW passes through the beam expander 33, the focus adjustment unit 36, and the scanning unit 37, and is irradiated onto the workpiece W. The controller 21 controls the scanning unit 37 and the driving unit 39 to scan the laser beam LW based on the coordinates for two dimensions (X coordinate and Y coordinate) among the coordinates of three dimensions included in processing information stored in the storage unit 21a. Further, the controller 21 adjusts the focal position of the laser beam LW based on the coordinate for one dimension (Z coordinate) among the coordinates of three dimensions. Thus, the workpiece W including the three-dimensional processing surface Wa is processed by focusing the laser beam LW on the processing surface Wa.

In the display mode, the controller 21 controls the visible light source 35 to emit the visible light beam LH. In this case, the controller 21 controls, for example, the laser beam source 22 so that the laser beam source 22 does not emit the laser beam LW toward the workpiece W. The visible light beam LH is irradiated onto the workpiece W through the focus adjustment unit 36 and the scanning unit 37. The controller 21 controls the focus adjustment unit 36 and the driving unit 38 with the position information stored in the storage unit 21a to arrange the lens 36a at the fixed position. In this case, when the lens 36a is located at a position separated from the fixed position, the controller 21 moves (returns) the lens 36a to the fixed position. Further, when the lens 36a is located at the fixed position, the controller 21 does not move the lens 36a and maintains the lens 36a at the fixed position. Then, the controller 21 controls the scanning unit 37 and the driving unit 39 to scan the visible light beam LH based on the coordinates for two dimensions (X coordinate and Y coordinate) among the coordinates of three dimensions included in the processing information stored in the storage unit 21a.

The visible light beam LH is scanned over the three-dimensional processing surface Wa of the workpiece W. The visible light beam LH is emitted as a parallel light. Thus, the beam diameter of the visible light beam LH on the processing surface Wa has a given size regardless of the shape of the processing surface Wa. The visible light beam LH allows the operator to check or adjust the irradiation position of the laser beam LW.

When irradiating the workpiece Wwith the visible light beam LH, the controller 21 controls only the scanning unit 37 and the driving unit 39 based on the coordinates for two dimensions (X coordinate and Y coordinate). The controller 21 does not use the coordinate for one dimension (Z coordinate). In other words, the controller 21 in the display mode does not control the position of the lens 36a in the focus adjustment unit 36. Thus, the number of control subjects in the display mode is less than that in the processing mode. This simplifies control. Further, since driving of the focus adjustment unit 36 and the driving unit 38 is not controlled, the operation time of the movement mechanism of the focus adjustment unit 36 is reduced and the life of the movement mechanism can be prolonged.

### Advantages

As described above, the present embodiment has the following advantages.

(1-1) The controller 21 controls the scanning unit 37 and the driving unit 39 to scan the laser beam LW. Further, the controller 21 controls the focus adjustment unit 36 and the driving unit 38 to adjust the focal position of the laser beam LW. Thus, the workpiece W including the three-dimensional processing surface Wa is processed by focusing the laser beam LW on the processing surface Wa.

(1-2) In the display mode that irradiates the workpiece Wwith the visible light beam LH, the controller 21 controls the scanning unit 37 and the driving unit 39 to scan the visible light beam LH over the workpiece W. The controller 21 does not change the inter-lens distance between the lenses 36a and 36b of the focus adjustment unit 36. Thus, the number of control subjects in the display mode is less than that in the processing mode, and control is simplified.

(1-3) When irradiating the workpiece Wwith the visible light beam LH, the controller 21 controls only the scanning unit 37 based on the coordinates for two dimensions (X coordinate and Y coordinate). The controller 21 does not use the coordinate for one dimension (Z coordinate). In other words, the controller 21 in the display mode does not control the position of the lens 36a in the focus adjustment unit 36. Thus, the number of control subjects in the display mode is less than that in the processing mode, and control can be easily performed.

(1-4) The visible light beam LH is scanned over the three-dimensional processing surface Wa of the workpiece W. The visible light beam LH is emitted as a parallel light. Thus, the beam diameter of the visible light beam LH on the processing surface Wa has a given size regardless of the shape of the processing surface Wa. The visible light beam LH allows the operator to check or adjust the irradiation position of the laser beam LW.

(1-5) In the display mode that irradiates the workpiece Wwith the visible light beam LH, the controller 21 does not control driving of the focus adjustment unit 36. Thus, an operation time of the movement mechanism of the focus adjustment unit 36 is reduced and the life of the movement mechanism can be prolonged.

(1-6) The laser processing device 10 includes the laser emission unit 11, the laser head 12, and the optical fiber cable 13. The laser emission unit 11 is connected to the laser head 12 the optical fiber cable 13. Thus, at least one of the laser emission unit 11 and the laser head 12 can be easily replaced.

(1-7) The laser processing device 10 includes the laser emission unit 11, the laser head 12, and the optical fiber cable 13. Thus, the laser head 12 is smaller in size than a laser processing device in which the laser emission unit 11 is integrated with the laser head 12. This facilitates arrangement of the laser head 12.

### Second Embodiment

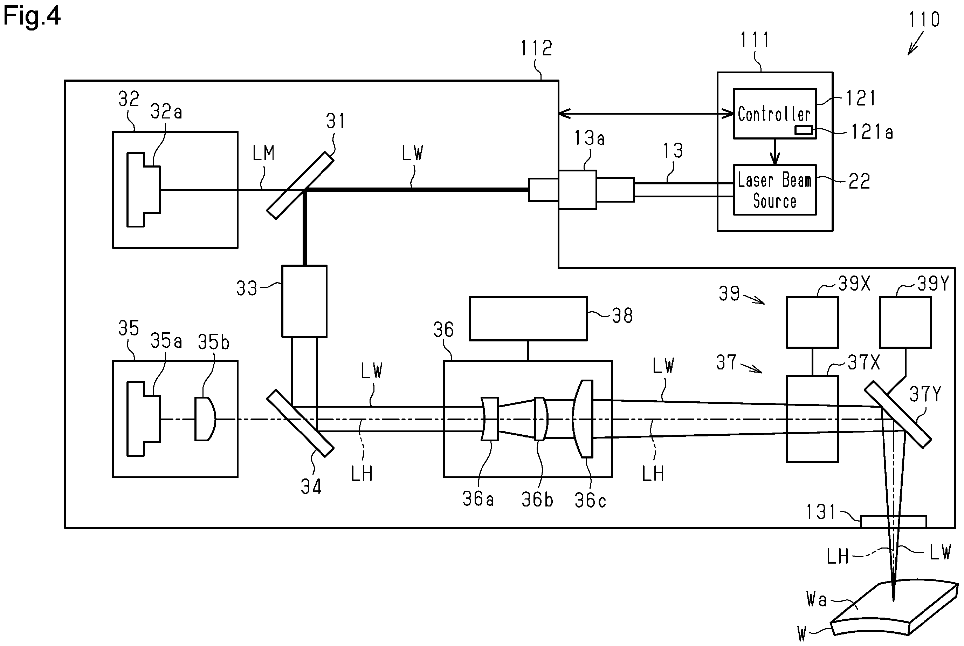

A second embodiment will now be described with reference to Fig. 4.

In the second embodiment, the same reference numerals are given to the same components as those in the above embodiment. Part or all of the components will not be described.

A laser processing device 110 of the second embodiment includes a laser emission unit 111, a laser head 112, and the optical fiber cable 13.

The laser emission unit 111 includes a controller 121 and the laser beam source 22.

The laser head 112 includes the mirror 31, the monitor unit 32, the beam expander 33, the mirror 34, the visible light source 35, the focus adjustment unit 36, the scanning unit 37, the driving units 38, 39, and a lens 131. The lens 131 is an optical member such as a converging lens, an fθ lens, or the like. The laser beam LW passed through the lens 131 is irradiated onto the workpiece W. The laser head 112 may include the lens 131 and the protective glass 40 of the first embodiment.

Further, the controller 121 of the laser processing device 110 of the second embodiment performs control in a different manner from the first embodiment. The controller 121 includes a storage unit 121a that stores correction data. In the display mode, the controller 121 controls the scanning unit 37 and the driving unit 39 to irradiate the workpiece Wwith the laser beam LW based on the coordinates for two dimensions (X coordinate and Y coordinate) in the coordinates of three dimensions, included in the processing information, and the correction data.

The correction data is for correcting the irradiation position of the visible light beam LH with respect to the irradiation position of the laser beam LW based on the wavelength of the laser beam LW and the wavelength of the visible light beam LH.

The wavelength (second wavelength) of the visible light beam LH differs from the wavelength (first wavelength) of the laser beam LW. The coordinates of three dimensions in the processing information indicate the position of the workpiece W irradiated with the laser beam LW. The optical members forming the laser processing device 110 have wavelength dependence. Thus, the irradiation position of the visible light beam LH may be shifted from the irradiation position of the laser beam LW. The correction data is set to reduce the shifted amount. The correction data is set to include, for example, the shifted amount (coordinates) of the irradiation position and the angles of the galvanometer mirrors 37X and 37Y with respect to the shifted irradiation position. In one example, when irradiating the workpiece Wwith the visible light beam LH, the controller 121 may use the correction data to correct the coordinates for two dimensions (X coordinate and Y coordinate) included in the processing information, and the controller 121 may control the scanning unit 37 based on the corrected coordinates for two dimensions. In another example, when irradiating the workpiece Wwith the visible light beam LH, the controller 121 may use the correction data to correct the angles of the galvanometer mirrors 37X and 37Y corresponding to the coordinates for two dimensions (X coordinate and Y coordinate) included in the processing information, and the controller 121 may control the scanning unit 37 based on the corrected angles of the galvanometer mirrors 37X and 37Y.

### Advantages

As described above, the second embodiment has the following advantages in addition to the advantages of the first embodiment.

(2-1) In the display mode, the controller 121 of the second embodiment controls the scanning unit 37 to irradiate the workpiece Wwith the laser beam LW based on the coordinates for two dimensions (X coordinate and Y coordinate) in the coordinates of three dimensions, included in the processing information, and the correction data. The correction data is for correcting the irradiation position of the visible light beam LH with respect to the irradiation position of the laser beam LW from the wavelength of the laser beam LW and the wavelength of the visible light beam LH. Thus, when the visible light beam LH having a wavelength differing from the wavelength of the laser beam LW is used, the irradiation position of the visible light beam LH is brought closer to the irradiation position of the laser beam LW. This allows checking and adjustment of the irradiation position of the laser beam LW to be performed with further precision.

### Third Embodiment

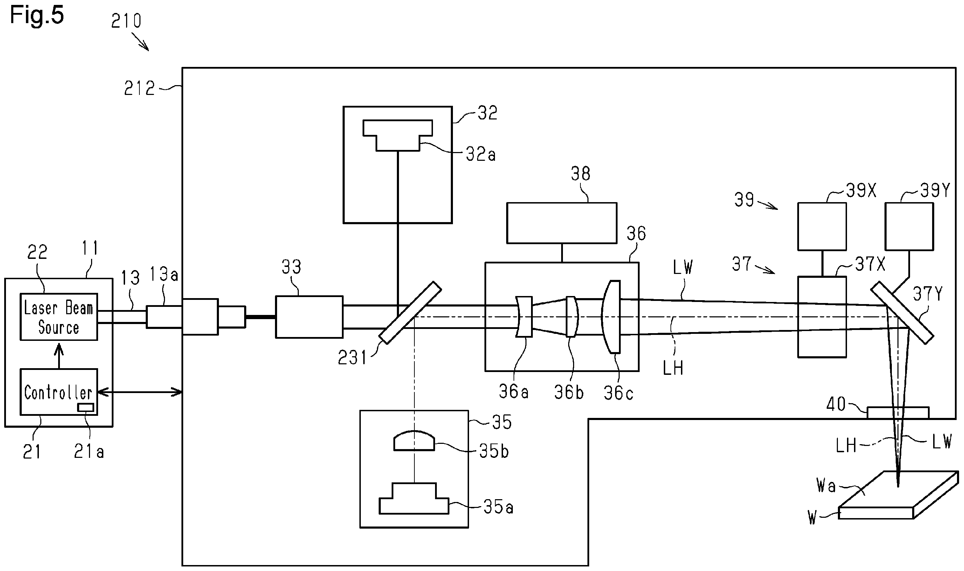

A third embodiment will now be described with reference to Fig. 5.

In the third embodiment, the same reference numerals are given to the same components as those in the above embodiment. Part or all of the components will not be described.

As shown in Fig. 5, a laser processing device 210 includes the laser emission unit 11, a laser head 212, and the optical fiber cable 13.

The laser head 212 includes a mirror 231, the monitor unit 32, the beam expander 33, the visible light source 35, the focus adjustment unit 36, the scanning unit 37, the driving units 38, 39, and the protective glass 40.

The beam expander 33 increases the beam diameter of an incident laser beam by a predetermined magnification ratio and emits a laser beam having an expanded beam diameter. The beam expander 33 may be connected to the optical fiber cable 13.

The mirror 231 is configured to reflect part of the laser beam LW emitted from the beam expander 33. The reflected part of the laser beam LW is received by the light-receiving element 32a of the monitor unit 32 as monitor light LM.

The mirror 231 also reflects the visible light beam LH emitted from the visible light source 35. The mirror 231 is adjusted so that the reflected laser beam LW and the transmitted visible light beam LH are coaxial.

The laser beam LW passed through the mirror 231 and the visible light beam LH reflected by the mirror 231 enter the focus adjustment unit 36.

### Advantages

As described above, the third embodiment has the following advantages in addition to the advantages of the first embodiment.

(3-1) In the laser processing device 210 of the third embodiment, the mirror 231 reflects part of the laser beam LW as the monitor light LM and also reflects the visible light beam LH to be coaxial with the laser beam LW. Thus, the number of optical members can be reduced.

### Modifications

The description of the embodiments is an example of a possible form of the laser processing device in the present disclosure. The description is not intended to limit the form of the laser processing device. In addition to the embodiments, the present disclosure includes, for example, modifications of the embodiments described below and combinations of at least two modifications that are consistent with each other.

In the above embodiments, the fixed position of the lens 36a may be changed. For example, the fixed position may be set to the position of the lens 36a when the mode is switched to the display mode (position when switched to display mode), and the lens 36a may be located at the fixed position; that is, the lens 36a may be held at the fixed position. Alternatively, the position of the lens 36a moved by an operation performed externally may be stored as the fixed position, and the lens 36a may be located at the fixed position. That is, the fixed position may be set to a preset reference position, a position determined by an externally performed operation, or the position when switched to the display mode.

In each of the above embodiments, the position or the like of an optical member such as the lens may be changed if the focal position of the laser beam LW emitted toward the workpiece W can be adjusted. For example, the position of the lens 36c included in the focus adjustment unit 36 may be located at any position between the focus adjustment unit 36 and the protective glass 40. Further, the protective glass 40 may be replaced by the lens 36c. In each embodiment, a lens such as an fθ lens may be added (specifically, before protective glass 40). Alternatively, the protective glass 40 may be replaced by an fθ lens.

In the above embodiment, a shutter may be arranged in a path from the laser beam source 22 to an optical member (mirror 34 in first embodiment) that is adjusted so that the visible light beam LH is coaxial, and the shutter in the display mode may block the laser beam LW emitted toward the workpiece W.

In the first and second embodiments, the laser head 12 of the laser processing devices 10 and 110 may be integrated with at least one of the laser beam source 22 and the controller 21. Likewise, in the third embodiment, the laser head 12 of the laser processing device 210 may be integrated with at least one of the laser beam source 22 and the controller 21.

With the laser processing device 210 of the third embodiment, the laser beam LW transmitted through the optical fiber cable 13 enters the beam expander 33. Thus, the size of the laser head 212 can be reduced by integrating the beam expander 33 with the optical fiber cable 13.

All features disclosed in the specification and/or the claims are intended to be disclosed separately and independently of each other for the purpose of disclosure and for the purpose of limitation of the inventions described in the claims independently of the combination of features in the embodiments and/or the claims. The descriptions representing all numerical ranges or sets of constituent elements disclose all possible intermediate values or intermediate constituent elements as limitations of numerical ranges for the purpose of disclosure and for the purpose of limitation of the inventions described in the claims especially.

### REFERENCE SIGNS LIST

10) laser processing device
11) laser emission unit
12) laser head
13) optical fiber cable
13a) head connector
21) controller
21a) storage unit
22) laser beam source
31) mirror
32) monitor unit
32a) light-receiving element
33) beam expander
34) mirror
35) visible light source
35a) light-emitting element
35b) lens
36) focus adjustment unit
36a to 36c) lenses
37) scanning unit
37X) galvanometer mirror
37Y) galvanometer mirror
38) driving unit
39) driving unit
39X) driving portion
39Y) driving portion
40) protective glass
110) laser processing device
111) laser emission unit
112) laser head
121) controller
121a) storage unit
131) lens
210) laser processing device
212) laser head
231) mirror
BP) reference plane
FP) farthest point plane
LH) visible light beam
LM) monitor light
LW) laser beam
NP) closest point plane
W) workpiece
Wa) processing surface

## Claims

1. A laser processing device, comprising:
a laser beam source that emits a laser beam for processing a workpiece;
a visible light source that emits a visible light beam;
a scanning unit that scans the laser beam and the visible light beam;
a lens movement unit including at least one lens that transmits the laser beam and the visible light beam and a movement mechanism that moves the lens in a direction of a path of the laser beam and the visible light beam; and
a controller that controls the lens movement unit and the scanning unit, wherein
when the laser beam passes through the lens, the controller controls the scanning unit to scans the laser beam and controls the lens movement unit to move the lens and change a focal position of the laser beam, and
when the visible light beam passes through the lens, the controller controls the scanning unit to scan the visible light beam without moving the lens from a fixed position.

2. The laser processing device according to claim 1, wherein
the lens movement unit includes a first lens that the laser beam and the visible light beam enter and a second lens that the laser beam and the visible light beam passed through the first lens enter, the lens being at least one of the first lens and the second lens, and
the scanning unit scans the laser beam and the visible light beam passed through the second lens.

3. The laser processing device according to claim 2, wherein
the movement mechanism is configured to change an inter-lens distance between the first lens and the second lens, and
when the laser beam passes through the first lens and the second lens, the controller changes the inter-lens distance to adjust the focal position of the laser beam, and
when the visible light beam passes through the first lens and the second lens, the controller does not change the inter-lens distance.

4. The laser processing device according to any one of claims 1 to 3, wherein in an adjustment range in which the focal position of the laser beam is changed by moving the lens with the lens movement unit, the fixed position is set to a position for setting a middle position of the adjustment range as the focal position.

5. The laser processing device according to any one of claims 1 to 3, wherein in an adjustment range in which the focal position of the laser beam is changed by moving the lens with the lens movement unit, the fixed position is set to a position at which the visible light beam passed through the lens becomes a parallel light.

6. The laser processing device according to any one of claims 1 to 3, wherein the controller sets the fixed position to a position where the lens is located in a display mode that scans the visible light beam, and the controller holds the lens at the fixed position.

7. The laser processing device according to any one of claims 1 to 6, wherein
the controller stores processing information including coordinates onto which the laser beam is irradiated and correction data for the coordinates,
when irradiating the workpiece with the laser beam, the controller controls the scanning unit and the lens movement unit in accordance with the coordinates to scans the laser beam and adjust the focal position of the laser beam, and
when irradiating the workpiece with the visible light beam, the controller controls the scanning unit in accordance with the coordinates and the correction data to scans the visible light beam.

8. The laser processing device according to claim 7, wherein
the coordinates are coordinates for three dimensions and include coordinates for two dimensions to control the scanning unit and a coordinate for one dimension to control the lens movement unit,
when irradiating the workpiece with the laser beam, the controller controls the scanning unit with the coordinates for two dimensions and the coordinate for one dimension, and
when irradiating the workpiece with the visible light beam, the controller controls the scanning unit with the coordinates for two dimensions and the correction data without using the coordinate for one dimension.
